# EUROPÄISCHE PATENTANMELDUNG

(11) **EP 3 843 251 A1**
(43) Veröffentlichungstag der Anmeldung: **30.06.2021**
(21) Anmeldenummer: 19219406.6
(22) Anmeldetag: 23.12.2019
(51) Int. Cl.: H02K 23/30, H02K 23/58

(54) **BÜRSTENKOMMUTIERTER DC-ELEKTROMOTOR MIT VERBESSERTEM SCHWINGUNGSVERHALTEN**

(71) Anmelder: Maxon International AG, 6072 Sachseln (CH)
(72) Erfinder: Schulze, Jens, 6074 Giswil (CH); Elmiger, Eugen, 6204 Sempach (CH); Emmrich, Kacper, 6003 Luzern (CH)
(74) Vertreter: Grünecker Patent- und Rechtsanwälte PartG mbB

(57) **Zusammenfassung**

Die vorliegende Erfindung betrifft einen bürstenkommutierter DC-Elektromotor, mit einem Stator, welcher einen Permanentmagneten umfasst, mit einer Anzahl **p** von Polpaaren, und mit einem gegenüber dem Stator drehbaren Rotor, welcher eine hohlzylindrische eisenlose Wicklung mit einer geometrischen Achse und einer Anzahl **Q** von Teilspulen, sowie einen Kollektor mit einer Anzahl **K** von Kollektorlamellen aufweist, wobei die Teilspulen über den Umfang des Rotors verteilt angeordnet sind, und wobei der bürstenkommutierte DC-Elektromotor ferner zumindest ein Paar von Bürsten aufweist, die in Kontakt mit dem Kollektor stehen und über welche die Teilspulen bestromt werden. Erfindungsgemäß ist vorgesehen, dass die Anordnung der Bürsten und die Verschaltung der Teilspulen derart gewählt sind, dass jeweils eine Anzahl **n≥2** von Teilspulen, die in Bezug auf die Achse des Rotors drehsymmetrisch um jeweils **360°/n** versetzt zueinander angeordnet sind, immer zur gleichen Zeit mit dem gleichen Strom beaufschlagt werden.

## Beschreibung

Die vorliegende Erfindung betrifft einen bürstenkommutierten DC-Elektromotor nach dem Oberbegriff des unabhängigen Anspruchs 1.

Ein bürstenkommutierter DC-Elektromotor der gattungsgemäßen Art weist einen Stator, welcher einen Permanentmagneten umfasst, mit einer Anzahl **p** von Polpaaren, und einen gegenüber dem Stator drehbaren Rotor auf, welcher eine hohlzylindrische eisenlose Wicklung mit einer geometrischen Achse und einer Anzahl **Q** von Teilspulen, sowie einen Kollektor mit einer Anzahl **K** von Kollektorlamellen aufweist, wobei die Teilspulen über den Umfang des Rotors verteilt angeordnet sind, und wobei der bürstenkommutierte DC-Elektromotor ferner zumindest ein Paar von Bürsten aufweist, die in Kontakt mit dem Kollektor stehen und über welche die Teilspulen bestromt werden.

Der Stator eines derartigen bürstenkommutierten Elektromotors kann einen zylindrischen Permanentmagneten aufweisen, der im Inneren der hohlzylindrischen eisenlosen Wicklung angeordnet ist. Außen befindet sich in der Regel eine magnetisch leitende Rückschlusshülse, die gleichzeitig als Gehäuse des Elektromotors dient. Aufgrund der eisenlosen Wicklung weisen derartige Elektromotoren kein Rastmoment auf, sodass ein ruckfreier Lauf auch bei kleinen Drehzahlen möglich ist. Damit einher gehen geringe Vibrationen und Geräusche. Aufgrund des fehlenden Eisens im Rotor ergeben sich keine Eisenverluste und es findet eine konstant eingeprägte Magnetisierung statt. Dies führt zu einem hohen Wirkungsgrad. Darüber hinaus bleibt das erzeugte Drehmoment selbst bei hohen Strömen proportional zum Motorstrom. Von Vorteil ist auch die geringe Massenträgheit des Rotors, was zu einer hohen Dynamik und zu kurzen Hochlaufzeiten führt.

Obwohl bürstenkommutierte DC-Elektromotoren weit verbreitet im Einsatz sind und in aller Regel einen gutes Betriebsverhalten aufweisen, hat sich in der Praxis gezeigt, dass es zuweilen zu Schwingungen im Bereich des Kollektors kommt, wodurch der Strom moduliert wird, was in der Folge zu einer Verstärkung der Schwingungen durch diese Rückkopplung führt. Denn bei bürstenkommutierten DC-Elektromotoren wird während der Kommutierung der Strom einer Teilspule durch Kurzschließen derselben über die Bürste zunächst zum Erliegen gebracht und anschließend mit umgekehrtem Vorzeichen wieder aufgebaut. Insbesondere bei zweipoligen Motoren mit gesehnten oder geschrägten Teilspulen ist mit dem Strom eine diametral resultierende Kraft oder ein quer zur Drehachse wirkendes Drehmoment verbunden. Beide Effekte können den Rotor an der Stelle des Kollektors in radialer Richtung auslenken. Ein bürstenkommutierter DC-Elektromotor nach dem Oberbegriff des unabhängigen Anspruchs 1 ist beispielsweise aus EP 3171498 B1 bekannt. Dieses Dokument beschäftigt sich mit dem Versuch, den oben erläuterten Effekten dadurch zu begegnen, dass die Spulenebene einer Teilspule um einen Korrekturwinkel zwischen 45° und 135° um die Achse des Rotors zur Kollektorebene der zugehörigen Kollektorlamellen verdreht angeordnet wird. Es hat sich jedoch gezeigt, dass die Schwingungen und die daraus resultierende Modulation des Stroms dadurch nicht vollständig verhindert werden können.

Die vorliegende Erfindung hat sich daher zur Aufgabe gestellt, einen bürstenkommutierten DC-Elektromotor der gattungsgemäßen Art bereit zu stellen, bei dem die geschilderten Probleme möglichst vollständig verhindert werden.

Die Aufgabe wird gelöst durch die Merkmale des unabhängigen Anspruchs 1. Demnach liegt bei einem bürstenkommutierten DC-Elektromotor nach dem Oberbegriff des unabhängigen Anspruchs 1 dann eine erfindungsgemäße Lösung der Aufgabe vor, wenn die Anordnung der Bürsten und die Verschaltung der Teilspulen derart gewählt sind, dass jeweils eine Anzahl **n≥2** von Teilspulen, die in Bezug auf die Achse des Rotors drehsymmetrisch um jeweils **360°/n** versetzt zueinander angeordnet sind, immer zur gleichen Zeit mit dem gleichen Strom beaufschlagt werden.

In einer vorteilhaften Ausführungsform weisen dabei die Teilspulen zumindest in einer Projektion auf einen Mantel der hohlzylindrischen eisenlosen Wicklung eine einheitliche Form auf.

Um Schwingungen möglichst vollständig zu vermeiden, ist es von Vorteil, wenn die Form der einzelnen Teilspulen vollkommen einheitlich ist. Die einheitliche Formgebung der Teilspulen ist vollkommen variabel. Geeignete Formen sind beispielsweise aus EP 1780871 A1, DE 1801263 A1 und DE 1188709 B bekannt. Die **n** drehsymmetrisch zueinander angeordneten und zur gleichen Zeit mit dem gleichen Strom beaufschlagten Teilspulen werden in derselben Richtung vom Strom durchflossen. Als Bürsten kommen vorzugsweise Graphitbürsten zum Einsatz. Die hohlzylindrische eisenlose Wicklung ist vorzugsweise selbsttragend, und die Teilspulen sind vorzugsweise nicht auf einen Kern oder dergleichen aufgewickelt.

Weitere bevorzugte Ausführungsformen der vorliegenden Erfindung sind Gegenstand der Unteransprüche.

Um die **n** Teilspulen mit dem gleichen Strom zu beaufschlagen, kann gemäß einer Ausführungsform der vorliegenden Erfindung vorgesehen sein, dass die jeweils **n** drehsymmetrisch zueinander angeordneten und immer gleichzeitig bestromten Teilspulen in Reihe geschaltet sind.

Die Beaufschlagung mit dem gleichen Strom kann auch dadurch erreicht werden, dass Anfang und Ende der **n** Teilspulen jeweils auf dem gleichen elektrischen Potenzial liegen, sofern die Teilspulen durch Symmetrie immer von einem magnetischen Fluss gleicher Amplitude und Phase durchflossen werden. Gemäß einer alternativen Ausführungsform der vorliegenden Erfindung kann somit vorgesehen sein, dass die jeweils **n** drehsymmetrisch zueinander angeordneten und immer gleichzeitig bestromten Teilspulen parallel geschaltet sind.

Die Erfindung eignet sich insbesondere für bürstenkommutierte DC-Elektromotoren mit einem einzigen Polpaar. Gemäß einer Ausführungsform der vorliegenden Erfindung ist die Anzahl **p** von Polpaaren somit gleich 1, wobei der Kollektor eine ungerade Anzahl **K≥3** von Kollektorlamellen aufweist, wobei die Anzahl **Q** von Teilspulen gleich **2·K** beträgt, und wobei die Anzahl **n** der jeweils drehsymmetrisch zueinander angeordneten und immer gleichzeitig bestromten Teilspulen **2** beträgt. Die beiden gleichzeitig bestromten Teilspulen liegen einander diametral gegenüber und sind vorzugsweise in Reihe geschaltet. Gemäß einer besonders bevorzugten und einfach umzusetzenden Ausführungsform der vorliegenden Erfindung ist jede Teilspule dabei auf einer Seite mit einer Kollektorlamelle und auf der jeweils anderen Seite mit der diametral gegenüberliegenden Teilspule verbunden ist.

Die Erfindung eignet sich auch für bürstenkommutierte DC-Elektromotor mit mehr als einem Polpaar. Gemäß einer Ausführungsform der vorliegenden Erfindung ist die Anzahl **p** von Polpaaren somit größer 1, wobei der Kollektor eine Anzahl **K=k·p** von Kollektorlamellen aufweist, wobei **k** eine ungerade Zahl **≥3** ist, wobei die Anzahl **Q** von Teilspulen gleich **q·p** ist, wobei die Zahl **q** entweder der Zahl **k** oder dem Zweifachen der Zahl **k** entspricht, und wobei die Anzahl **n** der jeweils drehsymmetrisch zueinander angeordneten und immer gleichzeitig bestromten Teilspulen der Zahl **p** entspricht, wenn **q=k** ist, oder dem Zweifachen von **p** entspricht, wenn **q=2·k** ist, wobei jeweils eine Anzahl **p** von Kollektorlamellen, die in Bezug auf die Achse des Rotors ebenfalls drehsymmetrisch um jeweils **360°/p** versetzt zueinander angeordnet sind, rotorseitig leitend miteinander verbunden sind.

Gemäß einer weiteren besonders bevorzugten Ausführungsform der vorliegenden Erfindung weisen die beiden Bürsten des Paars von Bürsten jeweils eine Breite auf, die der Summe aus einer halben Kollektorteilung und dem Abstand zwischen zwei Kollektorlamellen entspricht, wobei die beiden Bürsten derart angeordnet sind, dass der Beginn des Kommutierungsvorgangs der einen Bürste des Paars zeitgleich mit dem Abschluss des Kommutierungsvorgangs der jeweils anderen Bürste des Paars erfolgt. Dadurch werden die oben erläuterten negativen Effekte weiter reduziert. Mit der Breite der Bürsten ist die Breite direkt am Umfang des Kollektors, demnach an der Kontaktfläche zwischen Bürste und Kollektor gemeint. Die eigentliche Breite entspricht somit der sich aus halber Teilung und Abstand ergebenden Sehne.

Bei bürstenkommutierten DC-Elektromotoren mit mehr als einem einzigen Polpaar kann ferner gemäß einer weiteren besonders bevorzugten Ausführungsform der vorliegenden Erfindung vorgesehen sein, dass das Paar von Bürsten ein erstes Paar von Bürsten ist, wobei der bürstenkommutierte DC-Elektromotor ferner zumindest ein weiteres Paar von Bürsten aufweist, die ebenfalls in Kontakt mit dem Kollektor stehen, wobei die beiden Bürsten des weiteren Paars von Bürsten jeweils eine Breite aufweisen, die geringer ist als die Breite der Bürsten des ersten Paars von Bürsten. Von besonderem Vorteil ist es dabei, wenn die Bürsten des zumindest einen weiteren Paars von Bürsten aus einem Material bestehen, welches einen höheren Leitwert aufweist als das Material, aus dem die Bürsten des ersten Paars von Bürsten bestehen.

Dadurch wird der Strom vor dem Ende der Kommutierung stärker reduziert, was die Neigung zur Funkenbildung verringert. Zudem werden Zusatzverluste durch bereits einsetzende induzierte Spannung während der Kommutierung mit dem besser leitfähigen Material verringert. Durch die Verwendung einer Bürste mit einem Material höherer Leitfähigkeit werden zudem die Verluste durch den Bürstenübergangswiderstand verringert.

Gemäß einer weiteren besonders bevorzugten Ausführungsform der vorliegenden Erfindung ist vorgesehen, dass sämtliche Teilspulen die gleiche Form aufweisen. Dadurch können die eingangs beschriebenen negativen Effekte am effektivsten vermieden werden.

Wie weiter oben bereits erwähnt, eignet sich die Erfindung insbesondere für bürstenkommutierte DC-Elektromotoren, deren Rotor Teilspulen aufweist, die in Bezug auf die Achse des Rotors gesehnt und/oder geschrägt ausgeführt sind.

Ausführungsbeispiele der vorliegenden Erfindung werden im Folgenden anhand von Zeichnungen näher erläutert.

Es zeigen:
- Figur 1:: eine schematische Explosionsdarstellung eines bürstenkommutierten DC-Elektromotors,
- Figur 2:: eine schematische Darstellung der Teilspulenverschaltung eines zweipoligen bürstenkommutierten DC-Elektromotors gemäß einem ersten Ausführungsbeispiel der vorliegenden Erfindung,
- Figur 3:: die Darstellung aus Figur 2 mit zusätzlich dargestellten Bürsten,
- Figur 4:: eine schematische Darstellung der Teilspulenverschaltung eines vierpoligen bürstenkommutierten DC-Elektromotors gemäß einem zweiten Ausführungsbeispiel der vorliegenden Erfindung, und
- Figur 5:: eine schematische Darstellung der Teilspulenverschaltung eines vierpoligen bürstenkommutierten DC-Elektromotors gemäß einem dritten Ausführungsbeispiel der vorliegenden Erfindung.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

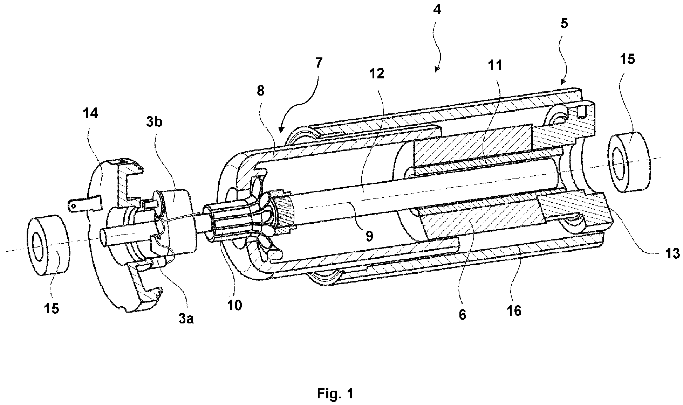

Anhand der Fig. 1 wird zunächst der generelle Aufbau eines bürstenkommutierten DC-Elektromotors 4 erläutert. Die wesentlichen Bestandteile eines DC-Elektromotors 4 mit eisenloser Wicklung sind der Stator 5 und der gegenüber dem Stator drehbar gelagerte Rotor 7. Zum Stator 5 gehören als wesentliche Bestandteile ein Permanentmagnet 6, welcher hohlzylindrisch ausgebildet sein kann, ein den Permanentmagnet 6 positionierender Flansch 13, ein aus Eisen bestehender, als Gehäuse dienender magnetischer Rückschluss 16, und ein weiterer Flansch 14, welcher als Bürsten- bzw. Gehäusedeckel dient und an dem bei dem gezeigten Ausführungsbeispiel zwei Kollektorbürsten 3a und 3b schwenkbar angebracht sind. Die Positionierung des Permanentmagneten 6 zum Flansch 13 erfolgt im dargestellten Fall mittels einer Hülse 11. In den Flanschen 13 und 14 sind Kugellager 15 angeordnet, die zur drehbaren Lagerung der Welle 12 des Rotors 7 dienen. Neben der Welle 12 mit deren geometrischer Achse 9 umfasst der Rotor 7 als wesentliche Bestandteile eine selbsttragende hohlzylindrische, eisenlose Wicklung 8 sowie einen aus mehreren Kollektorlamellen bestehenden und mit der Wicklung verbundenen Kollektor 10. Die selbsttragende hohlzylindrische eisenlose Wicklung 8 dreht sich im Luftspalt zwischen der Mantelfläche des Permanentmagneten 6 und der Innenfläche des Rückschlusses 16.

Die hohlzylindrische eisenlose Wicklung 8 besteht aus mehreren Teilspulen gleicher Form. Erfindungsgemäß ist vorgesehen, dass die Anordnung der Bürsten und die Verschaltung der Teilspulen derart gewählt werden, dass jeweils eine Anzahl **n≥2** von Teilspulen, die in Bezug auf die Achse des Rotors drehsymmetrisch um jeweils **360°/n** versetzt zueinander angeordnet sind, zur gleichen Zeit mit dem gleichen Strom beaufschlagt werden.

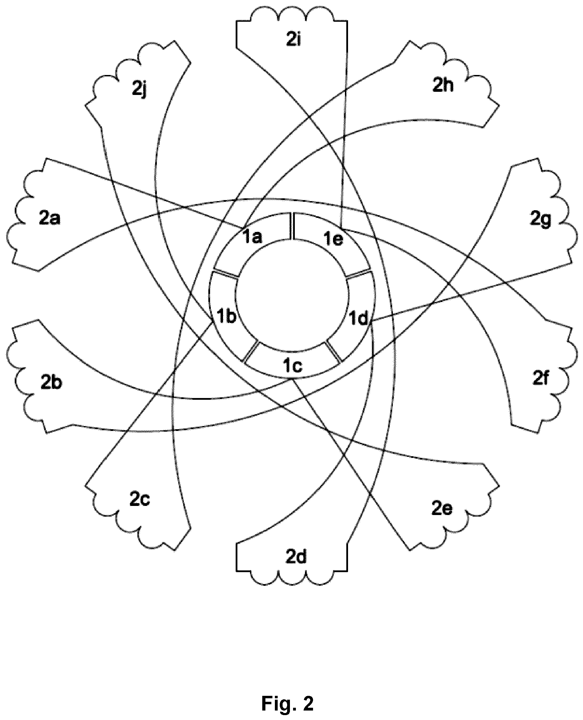

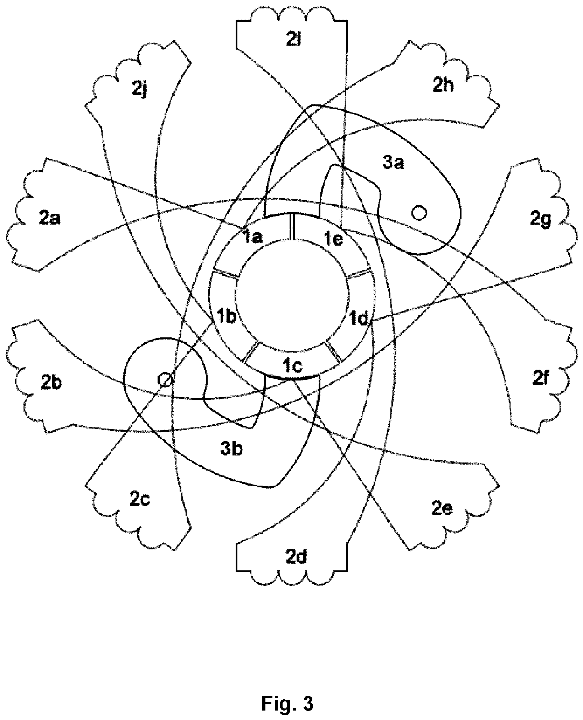

Ein Ausführungsbeispiel hierzu wird durch die schematische Darstellung der Spulenverschaltung in den Figuren 2 und 3 veranschaulicht. Bei dem gezeigten Ausführungsbeispiel weist der nicht dargestellte Stator einen diametral magnetisierten zweipoligen Permanentmagneten auf. Der Rotor weist insgesamt zehn Teilspulen (2a, 2b, 2c, 2d, 2e, 2f, 2g, 2h, 2i, 2j) auf, wobei der Kollektor fünf Kollektorlamellen (1a, 1b, 1c, 1d, 1e) aufweist. Die Teilspulen bilden fünf Paare (2a, 2f), (2c, 2h), (2e, 2j), (2g, 2b), (2i, 2d) von in Bezug auf die Rotorachse jeweils punktsymmetrisch angeordneten Teilspulen, die miteinander in Reihe geschaltet sind. Hierzu ist jede Teilspule auf einer Seite mit einer Kollektorlamelle verbunden und auf der anderen Seite mit der diametral gegenüberliegenden Teilspule. Diametral einander gegenüberliegende Teilspulen werden somit durch Schaltungszwang jeweils vom gleichen Strom durchflossen. Es wird darauf hingewiesen, dass die Abbildung lediglich schematischer Natur ist. Die Teilspulen sind durch das Symbol für Spulen dargestellt. In der Darstellung sind alle Verbindungen zu den Kollektorlamellen als elektrische Verbindungen, alle Linienkreuzungen hingegen nicht als elektrische Verbindungen zu verstehen.

Die Bestromung erfolgt über die beiden in Figur 3 dargestellten Kollektorbürsten 3a und 3b, die vorzugsweise als Graphitbürsten ausgeführt sind. Besonders vorteilhaft ist es, wenn die beiden Bürsten 3a und 3b jeweils eine Breite aufweisen, die der Summe aus einer halben Kollektorteilung und dem Abstand zwischen zwei Kollektorlamellen entspricht, wobei die beiden Bürsten 3a, 3b derart angeordnet sind, dass der Beginn des Kommutierungsvorgangs der einen Bürste zeitgleich mit dem Abschluss des Kommutierungsvorgangs der jeweils anderen Bürste erfolgt.

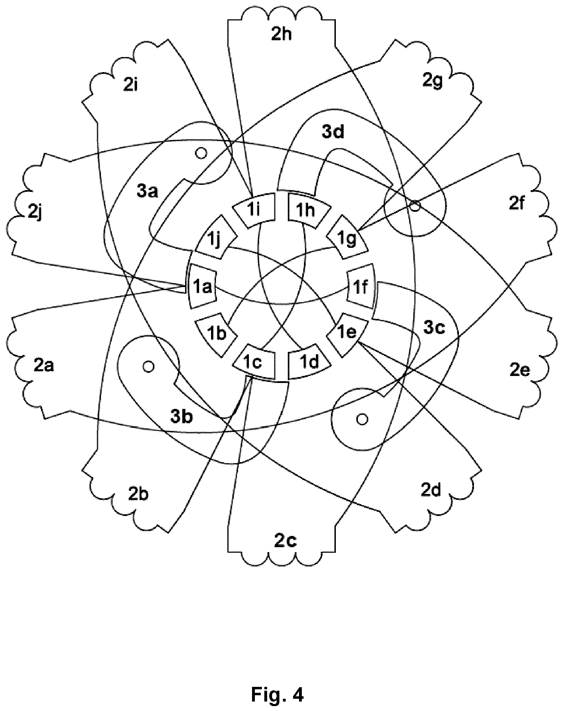

Die Figur 4 zeigt ein Schaltschema für den Rotor eines erfindungsgemäßen vierpoligen DC-Elektromotors mit zehn Kollektorlamellen (1a, 1b, 1c, 1d, 1e, 1f, 1g, 1h, 1i, 1j) sowie zehn Teilspulen (2a, 2b, 2c, 2d, 2e, 2f, 2g, 2h, 2i, 2j). Die Teilspulen bilden fünf Paare (2a, 2f), (2c, 2h), (2e, 2j), (2g, 2b), (2i, 2d) von in Bezug auf die Rotorachse jeweils punktsymmetrisch angeordneten Teilspulen, die miteinander in Reihe geschaltet sind und deren beide Enden jeweils mit einem Kollektorlamellenpaar leitend verbunden sind. Die jeweils gegenüberliegenden Kollektorlamellen sind zu fünf Paaren (1a, 1f), (1c, 1h), (1e, 1j), (1g, 1b), (1i, 1d) miteinander verbunden, so dass sie sich durch Schaltungszwang auf dem gleichen elektrischen Potential befinden.

Da gegenüberliegende Kollektorlamellen miteinander verbunden sind, kann selbst der dargestellte vierpolige Elektromotor grundsätzlich mit nur einem Bürstenpaar betrieben werden. In der dargestellten bevorzugten Ausführung wird der DC-Elektromotor jedoch mit zwei Bürstenpaaren ausgestattet. Vorzugsweise gilt generell, dass ebenso viele Bürstenpaare zum Einsatz kommen sollten wie Polpaare vorhanden sind. Bei dem gezeigten Ausführungsbeispiel ist das erste Bürstenpaar 3a, 3b analog zum Ausführungsbeispiel aus Figur 3 so ausgeführt, dass die Breite der Bürsten 3a, 3b in etwa der Summe aus der einer halben Kollektorteilung und dem Abstand zwischen zwei Kollektorlamellen entspricht, wobei die beiden Bürsten 3a, 3b derart angeordnet sind, dass der Beginn des Kommutierungsvorgangs der einen Bürste 3a zeitgleich mit dem Abschluss des Kommutierungsvorgangs der jeweils anderen Bürste 3b erfolgt. Die Bürsten 3a, 3b des ersten Bürstenpaars bestehen aus einem Material mit einem relativ niedrigen Leitwert. Das zweite Bürstenpaar 3c, 3d ist etwas schmaler ausgeführt und besteht aus einem Material mit einem höheren Leitwert. Dadurch wird der Strom vor dem Ende der Kommutierung stärker reduziert, was die Neigung zur Funkenbildung verringert. Zudem werden Zusatzverluste durch bereits einsetzende induzierte Spannung während der Kommutierung mit dem besser leitfähigen Material verringert. Durch die Verwendung einer Bürste mit einem Material höherer Leitfähigkeit werden ferner die Verluste durch den Bürstenübergangswiderstand verringert.

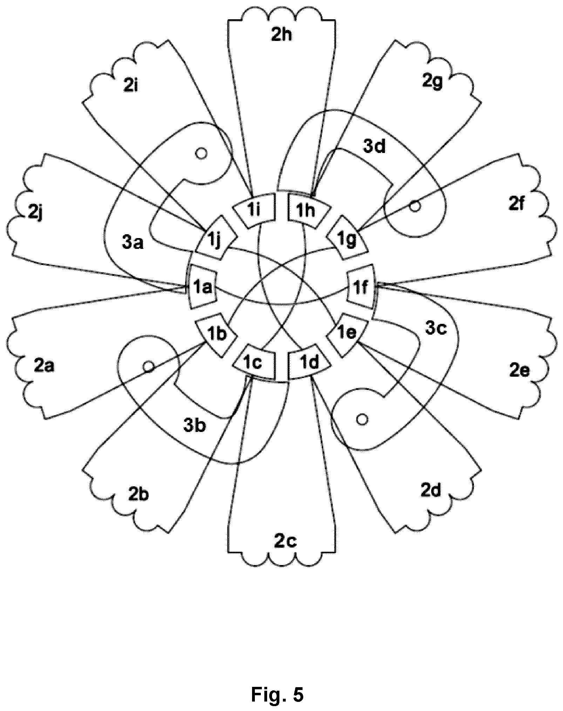

Die Figur 5 schließlich zeigt eine Abwandlung des Ausführungsbeispiels aus Figur 4. Die Teilspulenpaare sind hier nicht in Reihe sondern parallel geschaltet.

### Bezugszeichenliste

- 1a bis 1j: Kollektorlamellen
- 2a bis 2j: Teilspulen
- 3a bis 3d: Bürsten
- 4: bürstenkommutierter DC-Elektromotor
- 5: Stator
- 6: Permanentmagnet
- 7: Rotor
- 8: hohlzylindrische eisenlose Wicklung
- 9: Achse
- 10: Kollektor
- 11: Hülse
- 12: Welle
- 13: Flansch
- 14: Flansch (Bürstendeckel)
- 15: Kugellager
- 16: Gehäuse (magnetischer Rückschluss)

## Patentansprüche

1. Bürstenkommutierter DC-Elektromotor (4), mit einem Stator (5), welcher einen Permanentmagneten (6) umfasst, mit einer Anzahl **p** von Polpaaren, und mit einem gegenüber dem Stator (5) drehbaren Rotor (7), welcher eine hohlzylindrische eisenlose Wicklung (8) mit einer geometrischen Achse (9) und einer Anzahl **Q** von Teilspulen (2a-2j), sowie einen Kollektor (10) mit einer Anzahl **K** von Kollektorlamellen (1a-1j) aufweist, wobei die Teilspulen (2a-2j) über den Umfang des Rotors (7) verteilt angeordnet sind, und wobei der bürstenkommutierte DC-Elektromotor (4) ferner zumindest ein Paar von Bürsten (3a-3d) aufweist, die in Kontakt mit dem Kollektor (10) stehen und über welche die Teilspulen (2a-2j) bestromt werden, **dadurch gekennzeichnet, dass** die Anordnung der Bürsten (3a-3d) und die Verschaltung der Teilspulen (2a-2j) derart gewählt sind, dass jeweils eine Anzahl **n≥2** von Teilspulen (2a-2j), die in Bezug auf die Achse (9) des Rotors (7) drehsymmetrisch um jeweils **360°/n** versetzt zueinander angeordnet sind, immer zur gleichen Zeit mit dem gleichen Strom beaufschlagt werden.

2. Bürstenkommutierter DC-Elektromotor (4) nach Anspruch 1, **dadurch gekennzeichnet, dass** die Teilspulen (2a-2j) zumindest in einer Projektion auf einen Mantel der hohlzylindrischen eisenlosen Wicklung (8) eine einheitliche Form aufweisen.

3. Bürstenkommutierter DC-Elektromotor (4) nach Anspruch 1 oder 2, **dadurch gekennzeichnet, dass** die jeweils **n** drehsymmetrisch zueinander angeordneten und immer gleichzeitig bestromten Teilspulen (2a-2j) in Reihe geschaltet sind.

4. Bürstenkommutierter DC-Elektromotor (4) nach Anspruch 1 oder 2, **dadurch gekennzeichnet, dass** die jeweils **n** drehsymmetrisch zueinander angeordneten und immer gleichzeitig bestromten Teilspulen (2a-2j) parallel geschaltet sind.

5. Bürstenkommutierter DC-Elektromotor (4) nach einem der Ansprüche 1 bis 3, **dadurch gekennzeichnet, dass** die Anzahl **p** von Polpaaren gleich 1 ist, wobei der Kollektor (10) eine ungerade Anzahl **K≥3** von Kollektorlamellen (1a-1j) aufweist, wobei die Anzahl **Q** von Teilspulen (2a-2j) gleich **2·K** beträgt, und wobei die Anzahl **n** der jeweils drehsymmetrisch zueinander angeordneten und immer gleichzeitig bestromten Teilspulen (2a-2j) **2** beträgt.

6. Bürstenkommutierter DC-Elektromotor (4) nach Anspruch 5, **dadurch gekennzeichnet, dass** jede Teilspule (2a-2j) auf einer Seite mit einer Kollektorlamelle (1 a-1j) und auf der jeweils anderen Seite mit der diametral gegenüberliegenden Teilspule (2a-2j) verbunden ist.

7. Bürstenkommutierter DC-Elektromotor (4) nach einem der Ansprüche 1 bis 4, **dadurch gekennzeichnet, dass** die Anzahl **p** von Polpaaren größer 1 ist, wobei der Kollektor (10) eine Anzahl **K=k·p** von Kollektorlamellen (1a-1j) aufweist, wobei **k** eine ungerade Zahl **≥3** ist, wobei die Anzahl **Q** von Teilspulen (2a-2j) gleich **q·p** ist, wobei die Zahl **q** entweder der Zahl **k** oder dem Zweifachen der Zahl **k** entspricht, und wobei die Anzahl **n** der jeweils drehsymmetrisch zueinander angeordneten und immer gleichzeitig bestromten Teilspulen (2a-2j) der Zahl **p** entspricht, wenn **q=k** ist, oder dem Zweifachen von **p** entspricht, wenn **q=2·k** ist, wobei jeweils eine Anzahl **p** von Kollektorlamellen (1a-1j), die in Bezug auf die Achse (9) des Rotors (7) ebenfalls drehsymmetrisch um jeweils **360°/p** versetzt zueinander angeordnet sind, rotorseitig leitend miteinander verbunden sind.

8. Bürstenkommutierter DC-Elektromotor (4) nach einem der Ansprüche 1 bis 7, **dadurch gekennzeichnet, dass** die beiden Bürsten (3a, 3b) des Paars von Bürsten jeweils eine Breite aufweisen, die der Summe aus einer halben Kollektorteilung und dem Abstand zwischen zwei Kollektorlamellen (1a-1j) entspricht, wobei die beiden Bürsten (3a, 3b) derart angeordnet sind, dass der Beginn des Kommutierungsvorgangs der einen Bürste (3a, 3b) des Paars zeitgleich mit dem Abschluss des Kommutierungsvorgangs der jeweils anderen Bürste (3a, 3b) des Paars erfolgt.

9. Bürstenkommutierter DC-Elektromotor (4) nach Anspruch 7 in Verbindung mit Anspruch 8, **dadurch gekennzeichnet, dass** das Paar von Bürsten (3a, 3b) ein erstes Paar von Bürsten (3a, 3b) ist, wobei der bürstenkommutierte DC-Elektromotor (4) ferner zumindest ein weiteres Paar von Bürsten (3c, 3d) aufweist, die ebenfalls in Kontakt mit dem Kollektor (10) stehen, wobei die beiden Bürsten (3c, 3d) des weiteren Paars von Bürsten (3c, 3d) jeweils eine Breite aufweisen, die geringer ist als die Breite der Bürsten (3a, 3b) des ersten Paars von Bürsten (3a, 3b).

10. Bürstenkommutierter DC-Elektromotor (4) nach Anspruch 9, **dadurch gekennzeichnet, dass** die Bürsten (3c, 3d) des zumindest einen weiteren Paars von Bürsten (3c, 3d) aus einem Material bestehen, welches einen höheren Leitwert aufweist als das Material, aus dem die Bürsten (3a, 3b) des ersten Paars von Bürsten (3a, 3b) bestehen.

11. Bürstenkommutierter DC-Elektromotor (4) nach einem der Ansprüche 1 bis 10, **dadurch gekennzeichnet, dass** sämtliche Teilspulen (2a-2j) die gleiche Form aufweisen.

12. Bürstenkommutierter DC-Elektromotor (4) nach einem der Ansprüche 1 bis 11, **dadurch gekennzeichnet, dass** die Teilspulen (2a-2j) in Bezug auf die Achse (9) des Rotors (7) gesehnt und/oder geschrägt ausgeführt sind.
